# EUROPÄISCHE PATENTSCHRIFT

(11) **EP 1 346 872 B1**
(45) Veröffentlichungstag und Bekanntmachung des Hinweises auf die Patenterteilung: **07.11.2007**
(21) Anmeldenummer: 03002860.9
(22) Anmeldetag: 08.02.2003
(51) Int. Cl.: B60N 2/48

(54) **Fahrzeugsitz mit neigungsverstellbarer Kopfstütze**
Vehicle seat with in inclination adjustable headrest
Siège de véhicule avec appui-tête réglable en inclinaison

(30) Priorität: 04.03.2002 DE 10209189
(43) Veröffentlichungstag der Anmeldung: 24.09.2003
(73) Patentinhaber: DaimlerChrysler AG, 70327 Stuttgart (DE)
(72) Erfinder: Edrich, Hans, 67716 Heltersberg (DE); Flory, Gerhard, 71032 Böblingen (DE); Geisel, Thomas, 72108 Rottenburg (DE); Kinzer, Andreas, 66424 Homburg (DE); Schrom, Ralf-Henning, 72108 Rottenburg (DE); Utsch, Heiko, 67657 Kaiserslautern (DE); Weingart, Andreas, 67700 Niederkirchen (DE)

(56) Entgegenhaltungen:
- DE-A- 2 925 781
- DE-A- 3 116 208
- DE-A- 4 009 127
- DE-A- 10 022 441
- DE-A- 19 644 021
- FR-A- 2 583 361
- US-A- 5 288 129

## Beschreibung

Die Erfindung betrifft einen Fahrzeugsitz nach dem Oberbegriff des Anspruchs 1 (siehe z.B. US-A-5 288 129).

Die DE 196 44 021 C2 zeigt eine höhenverstellbare Kopfstütze für einen Fahrzeugsitz. Die Kopfstütze weist einen Polsterträger auf, der von oben in die Lehne des Fahrzeugsitzes eingreift und über einen elektrischen Linearantrieb in der Höhe verstellbar ist. Nachteilig ist hier, dass die Verstellmöglichkeit der Kopfstütze nicht ausreichen, um in allen Sitzpositionen eine komfortable Abstützung des Kopfes zu erreichen.

In der DE 31 16 208 A1 ist ein Operationsstuhl mit einer Kopfstütze dargestellt, deren Position manuell verstellbar ist. Diese Verstellvorrichtung ist in der Bedienung sehr aufwändig. Die Verstellung der Kopfstütze kann nur mit Mühe von dem Sitzenden alleine ausgeführt werden.

Aus der DE 100 22 441 A1 ist eine Rückenlehne für einen Fahrzeugsitz mit einer sogenannten aktiven Kopfstütze bekannt. Die Kopfstützenhöhe ist manuell einstellbar. Über einen in der Rückenlehne angeordneten zweiarmigen Hebel wird die Kopfstütze im Falle eines Heckcrash durch den auf den Hebel drückenden Oberkörper des Sitzenden auf dessen Kopf zu beschleunigt. Auch diese Kopfstütze ist nur unzureichend verstellbar, so dass eine komfortable Kopfabstützung nicht gewährleistet ist.

Der Erfindung liegt die Aufgabe zugrunde, einen Fahrzeugsitz mit verstellbarer Rückenlehne zu schaffen, der eine Kopfstütze aufweist, die in jeder möglichen Sitzposition eine komfortable und sichere Kopfabstützung gewährleistet, kompakt ausgebildet und möglichst einfach zu bedienen ist.

Die Aufgabe wird erfindungsgemäß durch einen Fahrzeugsitz nach den Merkmalen des Anspruchs 1 gelöst.

Der Fahrzeugsitz weist eine Höhenverstellvorrichtung und eine Neigungsverstellvorrichtung auf. Über die Höhenverstellvorrichtung wird die Höhe der Kopfstütze vorwählbar eingestellt, so dass eine für kleine und große Personen gleichermaßen gute Kopfabstützung gewährleistet ist. Zusätzlich weist der Fahrzeugsitz eine Neigungsverstellvorrichtung auf, die den Abstand der Kopfstütze zu dem Sitzenden und/oder die Neigung der Kopfstütze einstellt und/oder verändert. Die Neigungsverstellvorrichtung ist automatisch angetrieben und so ansteuerbar, dass die Kopfstütze in eine frei vorwählbare Position fahrbar ist. Um eine möglichst kompakte und insbesondere robuste Ausbildung der Neigungsverstellvorrichtung zu gewährleisten, ist diese in der Rückenlehne integriert angeordnet. Die Neigungsverstellvorrichtung ist mit einem Polsterträger der Kopfstütze verbunden, und wirkt auf diesen zum Schwenken der Kopfstütze um eine in der Rückenlehne angeordnete und quer verlaufende Schwenkachse ein, so dass die Neigungsverstellvorrichtung den Abstand der Kopfstütze von dem Sitzenden verändert und/oder anpasst.

Vorzugsweise ist die Anordnung der Schwenkachse in der Rückenlehne so gewählt, dass beim Verstellen der Kopfstützenneigung keine Höhenbewegung relativ zum Kopf auftritt. Insbesondere ist die Schwenkachse in einem Bereich angeordnet, der in etwa dem Drehpunkt des Kopfes beim Aufrichten in die Leseposition entspricht. Dadurch wird eine optimale Einstellung der Kopfstütze erzielt. Insbesondere bei einem Fahrzeugsitz mit schwenkbarer Rückenlehne, die zwischen einer aufrechten Sitzposition und einer geneigten Liegeposition verschwenkbar ist, kann so für alle möglichen Sitzpositionen eine optimale und/oder komfortable Einstellung der Kopfstütze gewährleistet werden. Es ist möglich, dass der Sitzende bei zurückgeschwenkter Lehne eine Ruheposition einnimmt und auch die Kopfstütze entsprechend zurückschwenkt. Es ist auch möglich, bei zurückgeschwenkter Lehne eine entspannte Leseposition einzunehmen, indem die Kopfstütze weiter vorgeschwenkt wird. So ist in jeder Sitzposition eine komfortable Kopfabstützung gewährleistet und der Sitzende kann seine Nackenmuskeln entspannen.

Für eine komfortable Bedienung ist es vorgesehen, dass die Höhenverstelleinrichtung und/oder die Neigungsverstelleinrichtung einen Antriebsmotor, vorzugsweise einen elektrischen oder pneumatischen Antriebsmotor aufweist bzw. aufweisen. So kann eine vorgewählte Position einfach angefahren werden und/oder eine für den Sitzenden angenehme Sitzposition durch Ansteuern der Neigungsverstelleinrichtung und/oder Höhenverstelleinrichtung z. B. über Knopfdruck eingestellt werden.

In einer Ausführung ist vorgesehen, dass die Höhenverstelleinrichtung einen Schlitten aufweist, der von einem Antriebsmotor in der Rückenlehne hinauf und heruntergefahren werden kann. Der Schlitten kann zum Haltern des Kopfstützenpolsterträgers ausgebildet sein, indem er eine Aufnahme aufweist, in die der Polsterträger der Kopfstütze von oben einsteckbar, vorzugsweise verrastbar ist. So wird bei der Auf- und/oder Abbewegung des Schlittens die Höhe der Kopfstütze variiert.

Die Erfindung sieht vor, dass die Neigungsverstellvorrichtung die Höhenverstellvorrichtung lagert, d.h., dass die Höhenverstellvorrichtung über die Neigungsverstellvorrichtung mit einem Teil des Lehnenrahmens bzw. dem Lehnenrahmen selbst verbunden ist. Zum Verändern der Neigung und/oder Position der Kopfstütze schwenkt die Neigungsverstellvorrichtung die Höhenverstellvorrichtung um eine Schwenkachse. Da die Höhenverstellvorrichtung die Kopfstütze bzw. den Polsterträger lagert, wirkt die Neigungsverstellvorrichtung mittelbar über die Höhenverstellvorrichtung auf die Kopfstütze zum Verstellen der Neigung und/oder Position ein.

Die Anordnung der Neigungsverstellvorrichtung und der Höhenverstellvorrichtung in der Rückenlehne hat den Vorteil, dass die Kopfstütze sehr geräuscharm verstellbar ist. Zudem können die Neigungsverstellvorrichtung und/oder die Höhenverstellvorrichtung geräuscharme Antriebe, vorzugsweise jeweils einen elektrischen Getriebemotor oder Spindelantrieb aufweisen um eine geräuscharme Verstellung der Kopfstütze zu gewährleisten.

Es ist möglich, den erfindungsgemäßen Fahrzeugsitz in Personenkraftwagen, Omnibussen, sowie Wasser- oder Schienenfahrzeugen zu verwenden. Auch eine Verwendung des erfindungsgemäßen Fahrzeugsitzes als bequemer Passagiersessel in Flugzeugen ist vorgesehen.

Die Erfindung ist durch den unabhängigen Anspruch 1 definiert.

Weitere Merkmale und Ausführungsformen der Erfindung ergeben sich aus den abhängigen Ansprüchen, den Figuren und der Figurenbeschreibung.

In den Figuren sind weitere Ausführungen der Erfindung dargestellt und erläutert, dabei zeigen:
- **Figur 1:**: Einen Fahrzeugsitz mit geneigter Rückenlehne mit Kopfstütze in Ruheposition,
- **Figur 2:**: einen Fahrzeugsitz mit geneigter Rückenlehne mit Kopfstütze in Leseposition,

- **Figur 3:**: eine Seitenansicht der Rückenlehne mit Neigungsverstellvorrichtung,
- **Figur 4:**: eine schematische Darstellung des Rahmens der Rückenlehne.

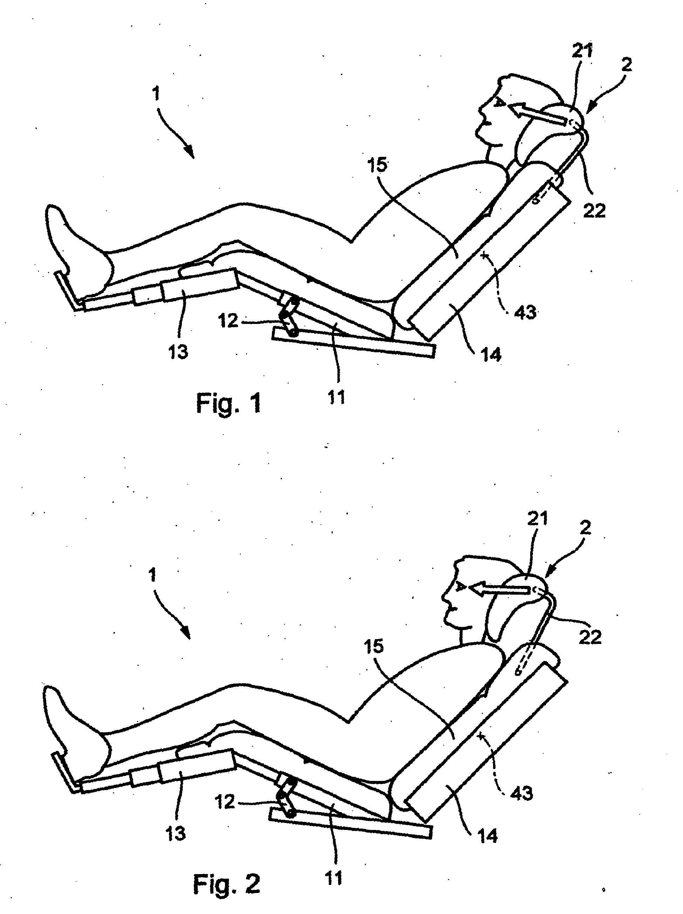

In der **Figur 1** ist ein Fahrzeugsitz 1 mit einer ruhenden Person dargestellt. Der Fahrzeugsitz ist als verstellbarer Fahrzeugsitz mit einer aufrechten Sitzposition, wie sie bei einem herkömmlichen Fahrzeugsitz üblich ist, und einer einstellbaren Ruheposition ausgebildet. Er weist eine Rückenlehne 14 mit Polster 15, ein Sitzkissen 11 sowie eine Fußstütze 13 auf. Am oberen Ende der Rückenlehne 14 ist eine Kopfstütze 2 angeordnet. In der in Figur 1 dargestellten Ruheposition ist gegenüber einer aufrechten Sitzposition die Fußstütze 13 angehoben, so dass der Sitzende seine Füße bequem auf der Fußstütze 13 ablegen kann. Das Sitzkissen 11 ist über einen Sitzkissenversteller 12 in der Neigung verstellbar, so dass das Sitzkissen 11 eine Sitzfläche mit einstellbarer Neigung bildet.

Die Rückenlehne 14 ist um eine quer verlaufende Schwenkachse schwenkbar, so dass eine mehr aufrechte oder eine mehr liegende Sitzposition wählbar ist.

Die am oberen Ende der Rückenlehne 14 angeordnete Kopfstütze 2 weist einen Polsterträger 22 und ein Kopfpolster 21 auf. Das Kopfpolster ist so ausgeformt, dass es eine optimale Anlage für den Hinterkopf und den Nacken des Sitzenden bildet. Somit gewährleistet die Kopfstütze eine flächige Abstützung des Kopfes. Der Polsterträger 22 haltert das Kopfpolster über ein im oberen Bereich des Kopfpolsters 21 angeordnetes Gelenk, so dass die Lage des Kopfpolsters 21 relativ zu dem Polsterträger 22 einstellbar ist.

Über eine Neigungsverstellvorrichtung 4 ist der Polsterträger 22 um eine in der Rückenlehne 14 angeordnete Schwenkachse 43 schwenkbar. Somit kann der Sitzende sich von der in der Figur 1 dargestellten Ruheposition in eine mehr aufgerichtete Leseposition bewegen die in der **Figur 2** dargestellt ist. Die Schwenkachse 43 ist in der Rückenlehne im Bereich des Drehpunktes angeordnet, um den sich der Kopf des Sitzenden beim Aufrichten dreht. So wird durch das Verschwenken der Kopfstütze 2 keine Bewegung relativ zu dem Kopf ausgeführt und die Abstützung ist in nicht nur in den Endlagen sondern auch in jeder Zwischenposition des Polsterträgers 22 optimal.

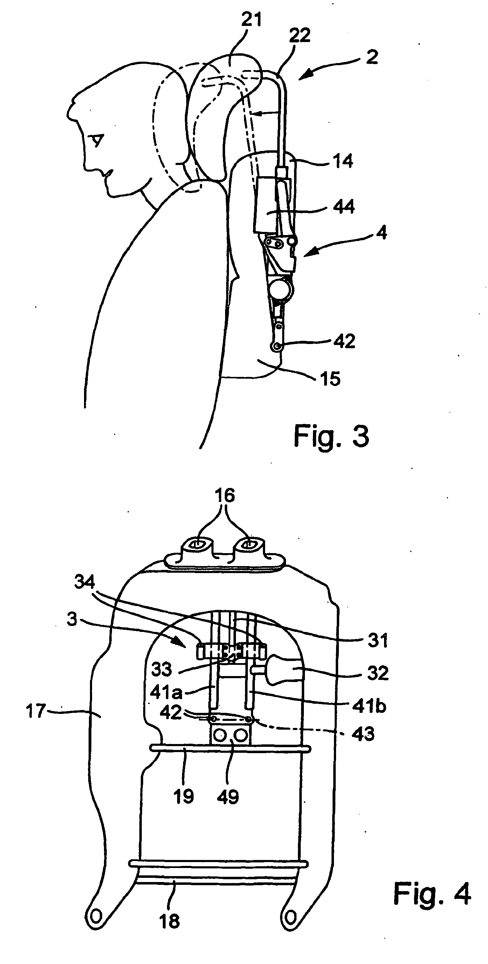

**Figur 3** zeigt einen Schnitt durch die Rückenlehne 14 in Seitenansicht. Der Polsterträger 22 der Kopfstütze 2 greift von oben durch Öffnungen 16 in die Rückenlehne 14 ein und ist in der Neigungsverstellvorrichtung 4 gelagert. Diese ist vollständig im Inneren der Rückenlehne 14 aufgenommen, wobei das Polster 15 der Rückenlehne zur Geräuschdämmung dient. Über Schwenklager 42 ist die Neigungsverstellvorrichtung 4 am Rahmen 17 der Rückenlehne 14 gelagert.

Ein elektrischer Getriebemotor 44 greift zwischen Lehnenrahmen 17 und Neigungsverstellvorrichtung 4 ein und schwenkt diese um die Schwenkachse 43, wie auch in der **Figur 4** dargestellt ist. Dort ist der Rahmen 17 der Rückenlehne 14 mit der Neigungsverstelleinrichtung 4 und der Höhenverstelleinrichtung 3 in perspektivischer Darstellung gezeigt. Der Lehnenrahmen 17 ist U-förmig ausgebildet und weist mittig und endseitig angeordente Querstreben 18, 19 zur Verstärkung auf. Am oberen Ende des Lehnenrahmens ist ein Gehäuse mit Öffnungen 16 angeordnet, in dem der Antriebsmotor 44 der Neigungsverstellvorrichtung 4 aufgenommen ist. Die Neigungsvertellvorrichtung 4 weist zwei parallel angeordnete Rohre 41a, 41b auf. Ein Ende dieser Rohre 41a, 41b ist über je ein Drehlager 42 mittelbar über ein Distanzstück 49 an der mittleren Querstrebe 19 des Lehnenrahmens 17 gelagert. Das andere Ende der Rohre 41a, 41b reicht in das oben am Lehnenrahmen angeordnete Gehäuse hinein und ist dort über eine Koppel mit dem jeweils anderen Rohr verbunden. Der Antriebsmotor 44 wirkt über ein Getriebe und ein Zahnsegment auf die Koppel zum gleichzeitigen und parallelen Verschwenken beider Rohre 41a und 41b ein. Über Anschläge wird der Schwenkwinkel der Rohre 41a, 41b begrenzt.

Die Schwenkachse 43 der Kopfstütze verläuft durch die Schwenklager 42 und wird durch deren Anordnung festgelegt. Das Distanzstück 49 bestimmt den Abstand der Schwenklager 42 zu der mittleren Querstrebe 19 und damit die Lage der Schwenkachse 43 innerhalb der Rückenlehne 14. Durch Ändern des Distanzstückes kann die Lage der Schwenkachse 43 so variiert und/oder an den Lehnenrahmen 17 angepasst werden, dass die Schwenkachse in etwa mit dem natürlichen Drehpunkt des Kopfes bei der Aufrichtbewegung übereinstimmt.

Die Rohre 41a, 41b lagern die Höhenverstelleinrichtung 3, so dass mit dem Verschwenken der Rohre 41a und 41b, die Höhenverstelleinrichtung 3 mitgeschwenkt wird. Ein Schlitten 33 der Höhenverstelleinrichtung 3 ist auf den Rohren längsverschiebbar geführt. Über eine Gewindespindel 31, die von einem Antriebsmotor 33 angetrieben ist, wird der Schlitten 33 automatisch nach oben bzw. nach unten gefahren. Dieser Spindelantrieb ist selbsthemmend, so dass die angefahrene Position von der Höhenverstelleinrichtung 3 selbsttätig gehalten wird.

Der Schlitten 33 weist zwei Aufnahmen 34 auf, in die das Gestänge des Polsterträgers 22 von oben einsteckbar ist. Die Aufnahmen 34 verrasten lösbar mit dem Polsterträger 22, so dass dieser sicher in dem Schlitten 33 gehalten ist und zusammen mit diesen nach oben bzw. nach unten verfahrbar und/oder über die Neigungsverstellvorrichtung 4 verschwenkbar ist.

## Patentansprüche

1. Fahrzeugsitz mit einer Sitzfläche und einer Rückenlehne mit einem Lehnenrahmen, die um eine quer verlaufende Achse schwenkbar ist, vorzugsweise von einer aufrechten Sitzposition in eine geneigte Ruheposition schwenkbar ist,
und mit einer über eine Höhenverstellvorrichtung höhenverstellbare Kopfstütze, welche einen von oben durch eine Öffnung in die Rückenlehne eingreifenden Kopfpolsterträger und ein Kopfpolster aufweist,
wobei die Rückenlehne eine innerhalb der Rückenlehne (14) angeordnete Neigungsverstellvorrichtung aufweist,
**dadurch gekennzeichnet,**
**dass** die Neigungsverstellvorrichtung (4) automatisch angetrieben und zum Schwenken der Kopfstütze um eine innerhalb der Rückenlehne angeordnete und quer verlaufende Schwenkachse (43) in eine frei vorwählbare Position ausgebildet ist und einen Antriebsmotor (44) sowie zwei parallel angeordnete Rohre (41a, 41b) aufweist, die jeweils an ihrem einen Ende ein mit einem Rahmen (17) der Rückenlehne (14) verbundenes Drehlager (42) aufweisen und die Höhenverstellvorrichtung (3) schwenkbar und verschiebbar lagern und der Antriebsmotor (44) zum Schwenken der Kopfstütze zwischen dem Lehnenrahmen (17) und den Rohren (41a, 41b) eingreift.

2. Fahrzeugsitz nach Anspruch 1,
**dadurch gekennzeichnet,**
**dass** die Höhenverstellvorrichtung (3) innerhalb der Rückenlehne (14) angeordnet ist und einen elektrischen oder pneumatischen Antriebsmotor (32) aufweist, der zum verstellen der Höhe der Kopfstütze (2) ausgebildet ist.

3. Fahrzeugsitz nach Anspruch 1 oder 2,
**dadurch gekennzeichnet,**
**dass** die Höhenverstellvorrichtung (3) einen Antriebsmotor (32) und einen Schlitten (33) aufweist, wobei der Antriebsmotor (32) zum Verstellen der Kopfstützenhöhe über ein Getriebe und eine Gewindespindel (31) den Schlitten (33) antreibt.

4. Fahrzeugsitz nach einem der Ansprüche 1 bis 3,
**dadurch gekennzeichnet,**
**dass** die zwei Rohre (41a, 41b) der Neigungsverstellvorrichtung (4) in der Rückenlehne (14) angeordnet sind.

5. Fahrzeugsitz nach Anspruch 4,
**dadurch gekennzeichnet,**
**dass** die Drehlager (42) die Lage der Schwenkachse (43) der Kopfstütze (2) festlegen und vorzugsweise vorgesehen ist, dass die Drehlager (42) über ein Distanzstück (49) mit dem Rahmen (17) der Rückenlehne (14) verbunden ist, so dass die Lage der Schwenkachse (43) über dieses Distanzstück (49) variierbar ist.

6. Fahrzeugsitz nach einem der Ansprüche 3 bis 5,
**dadurch gekennzeichnet,**
**dass** die zwei Rohre (41a, 41b) der Neigungsverstellvorrichtung (4) den Schlitten (33) der Höhenverstellvorrichtung (3) linear verschiebbar lagern und so angeordnet sind, dass der Schlitten (33) über den Antriebsmotor (32) zum Verstellen der Kopfstützenhöhe relativ zu der Rückenlehne (14) nach oben und/oder unten verfahrbar ist.

7. Fahrzeugsitz nach einem der Ansprüche 3 bis 6,
**dadurch gekennzeichnet,**
**dass** der Schlitten (33) eine Aufnahmevorrichtung (34) zum Haltern des Polsterträgers (22) aufweist.

8. Fahrzeugsitz nach einem der Ansprüche 1 bis 7,
**dadurch gekennzeichnet,**
**dass** die Neigungsverstellvorrichtung (4) einen elektrischen oder pneumatischen Antriebsmotor (44) aufweist.

## Claims

1. Vehicle seat with a seat surface and a backrest with a backrest frame that can be tilted about a transversely extending axis, preferably from an upright sitting position to an inclined rest position,
and with a headrest whose height can be adjusted by means of a height adjustment device, which comprises a head cushion support that engages in the backrest from above through an opening and a head cushion, the backrest comprising an inclination adjustment device arranged inside the backrest (14),
**characterised in that**
the inclination adjustment device (4) is driven automatically, is made so that it tilts the headrest to a freely pre-selectable position about a transversely extending swivel axis (43) located inside the backrest, and comprises a drive motor (44) and two parallel tubes (41a, 41b), each having at one end a swivel bearing (42) connected to a frame (17) of the backrest (14) and supporting the height adjustment device (3) so that it can swivel and be moved, and the drive motor (44) for tilting the headrest engages between the backrest frame (17) and the tubes (41a,41b).

2. Vehicle seat according to Claim 1,
**characterised in that**
the height adjustment device (3) is located inside the backrest (14) and comprises an electric or pneumatic drive motor (32) made so as to adjust the height of the headrest (2).

3. Vehicle seat according to Claims 1 or 2,
**characterised in that**
the height adjustment device (3) comprises a drive motor (32) and a slider (33), such that to adjust the height of the headrest, the drive motor (32) drives the slider (33) via a gear and a threaded spindle (31).

4. Vehicle seat according to any of Claims 1 to 3,
**characterised in that**
the two tubes (41a, 41b) of the inclination adjustment device (4) are located inside the backrest (14).

5. Vehicle seat according to Claim 4,
**characterised in that**
the swivel bearings (42) determine the position of the swivel axis (43) of the headrest (2), and it is preferably provided that the swivel bearing (42) is connected via a spacer (49) to the frame (17) of the backrest (14), so that the position of the swivel axis (43) can be varied by means of this spacer (49).

6. Vehicle seat according to any of Claims 3 to 5,
**characterised in that**
the two tubes (41a, 41b) of the inclination adjustment device (4) support the slider (33) of the height adjustment device (3) so that it can move linearly, and are arranged in such manner that the slider (33) can be moved by the drive motor (32) upwards and/or downwards relative to the backrest (14) in order to adjust the height of the headrest.

7. Vehicle according to any of Claims 3 to 6,
**characterised in that**
the slider (33) has a holding device (34) for holding the cushion support (22).

8. Vehicle seat according to any of Claims 1 to 7,
**characterised in that**
the inclination adjustment device (4) has an electric or pneumatic drive motor (44).

## Revendications

1. Siège de véhicule avec une surface de siège et un dossier équipé d'un cadre de dossier, lequel dossier peut être pivoté autour d'un axe s'étendant transversalement, de préférence depuis une position de siège droite en une position de repos inclinée,
et d'un appui-tête réglable en hauteur par le biais d'un dispositif de réglage de la hauteur qui présente un support d'appui-tête rembourré s'engageant par le dessus au travers d'une ouverture dans le dossier et un appui-tête rembourré, le dossier présentant un dispositif de réglage de l'inclinaison disposé au sein du dossier (14),
**caractérisé en ce que** le dispositif de réglage de l'inclinaison (4) est entraîné automatiquement et est conçu pour pivoter l'appui-tête autour d'un axe de pivotement (43) disposé au sein du dossier et s'étendant transversalement dans une position librement présélectionnable et présente un moteur d'entraînement (44) ainsi que deux tubes (41a, 41b) disposés parallèlement, qui présentent chacun au niveau de l'une de leurs extrémités un coussinet de pivotement (42) relié à un cadre (17) du dossier (14) et logent le dispositif de réglage de la hauteur (3) de manière pivotante et mobile et le moteur d'entraînement (44) servant à faire pivoter l'appui-tête s'engage entre le cadre du dossier (17) et les tubes (41a, 41b).

2. Siège de véhicule selon la revendication 1, **caractérisé en ce que** le dispositif de réglage de la hauteur (3) est disposé au sein du dossier (14) et présente un moteur d'entraînement (32) électrique ou pneumatique qui est conçu pour régler la hauteur de l'appui-tête (2).

3. Siège de véhicule selon la revendication 1 ou 2, **caractérisé en ce que** le dispositif de réglage de la hauteur (3) présente un moteur d'entraînement (32) et un chariot (33), le moteur d'entraînement (32) servant à régler la hauteur de l'appui-tête entraînant le chariot (33) par le biais d'un engrenage et d'une broche filetée (31).

4. Siège de véhicule selon l'une quelconque des revendications 1 à 3, **caractérisé en ce que** les deux tubes (41a, 41b) du dispositif de réglage de l'inclinaison (4) sont disposés dans le dossier (14).

5. Siège de véhicule selon la revendication 4, **caractérisé en ce que** les coussinets de pivotement (42) déterminent la position de l'axe de pivotement (43) de l'appui-tête (2) et il est prévu de préférence que le coussinet de pivotement (42) soit relié au cadre (17) du dossier (14) par le biais d'une pièce d'écartement (49) de sorte que la position de l'axe de pivotement (43) puisse être variée par le biais de cette pièce d'écartement (49).

6. Siège de véhicule selon l'une quelconque des revendications 3 à 5, **caractérisé en ce que** les deux tubes (41a, 41b) du dispositif de réglage de l'inclinaison (4) logent linéairement et de manière mobile le chariot (33) du dispositif de réglage de la hauteur (3) et sont disposés de telle sorte que le chariot (33) puisse se déplacer vers le haut et/ou vers le bas par le biais du moteur d'entraînement (32) servant à régler la hauteur de l'appui-tête par rapport au dossier (14).

7. Siège de véhicule selon l'une quelconque des revendications 3 à 6, **caractérisé en ce que** le chariot (33) présente un dispositif de réception (34) pour loger le support de l'appui-tête rembourré (22).

8. Siège de véhicule selon l'une quelconque des revendications 1 à 7, **caractérisé en ce que** le dispositif de réglage de l'inclinaison (4) présente un moteur d'entraînement (44) électrique ou pneumatique.
